(19) Europäisches Patentamt / European Patent Office / Office européen des brevets

(11) **EP 3 310 817 B1**

(12) **EUROPEAN PATENT SPECIFICATION**

(45) Date of publication and mention
of the grant of the patent:
**26.11.2025 Bulletin 2025/48**

(21) Application number: **16730372.6**

(22) Date of filing: **17.06.2016**

(51) International Patent Classification (IPC):
**C08B 37/00** *(2006.01)*    **A23L 29/231** *(2016.01)*

(52) Cooperative Patent Classification (CPC):
**C08B 37/0048; A23L 29/231**

(86) International application number:
**PCT/EP2016/064017**

(87) International publication number:
**WO 2016/202986 (22.12.2016 Gazette 2016/51)**

(54) **PROCESS FOR EXTRACTION OF PECTIN**

VERFAHREN ZUR EXTRAKTION VON PEKTIN

PROCÉDÉ D'EXTRACTION DE PECTINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2015 GB 201510623**

(43) Date of publication of application:
**25.04.2018 Bulletin 2018/17**

(73) Proprietor: **International N&H Denmark ApS
2800 Kongens Lyngby (DK)**

(72) Inventor: **BUCHHOLT, Hans, Christian
8220 Brabrand (DK)**

(74) Representative: **International N&H EMEA
Parallelvej 16
2800 Kongens Lyngby (DK)**

(56) References cited:
**WO-A1-2014/083032    WO-A2-01/96590
WO-A2-2006/096884**

## Description

## FIELD OF THE INVENTION

This invention relates to a process for extraction of pectin from pectin containing starting material. Further disclosed is pectin obtained in this process.

## BACKGROUND OF THE INVENTION

Pectin is a commonly used additive in the food industry. It is useful, for example, as a stabilizing agent, thickener and gelling agent in, for example, jams and other fruit-based products as well as in sour milk-based products such as yogurts. Pectin has also found other uses in the food industry, for example as a fat replacer.

Pectin is a structural polysaccharide typically found in the form of a water insoluble parent pectic substance - protopectin - in the primary cell wall and the middle lamella of green land plants such as fruit and vegetables. Major sources of commercial pectin products are citrus peel and apple pomace in which protopectin represents 10-40% by weight of the dry matter.

Pectin is the generic designation for water-soluble compounds which result from restricted hydrolysis of protopectin. The exact nature of protopectin is not completely understood. It is, however, generally recognized that protopectin is a complex structure in which pectin is attached to other cell wall components such as cellulose, cell wall protein and hemicellulose by covalent bonds, hydrogen bonds and/or ionic interactions.

Pectin comprises linear galacturonan chains (polymer of $\alpha$-(1-4)-linked-D-galacturonic acid) which are interrupted with rhamno-galacturonan backbones (polymers of the repeating disaccharide $\alpha$-(1-4)-D-galacturonic acid-$\alpha$-(1-2)-L-rhamnose), which often has side chains of polymeric arabinogalactans glycosidic linked to the O-3 or O-4 positions of L-rhamnose. The galacturonan sequences can have D-xylose and D-apiose glycosidic linked to their O-2 or O-3 positions, which also can be substituted with ester-linked acetyl groups. The long chains of $\alpha$-(1-4)-linked D-galacturonic acid residues are commonly referred to as "smooth regions", whereas the highly branched rhamnogalacturonan regions are commonly referred to as the "hairy regions".

Pectin molecules have a molecular weight of up to more than 200,000 Da and a degree of polymerization up to more than 1000 units. A proportion of the carboxylic acid groups of the galacturonic acid units are methyl-esterified. In plants the residual carboxyl groups are partly or completely neutralized with cations of calcium, potassium and magnesium which inherently are contained in the plant tissues.

The "degree of esterification" (DE) means the extent to which free carboxylic acid groups contained in the galacturonic acid units of pectin have been methyl esterified. The resultant pectin is referred to as "high ester pectin" ("HE pectin" for short) if more than 50% of the carboxyl groups are esterified. The resultant pectin is referred to as a "low ester pectin" ("LE pectin" for short or a "low methoxyl pectin") if less than 50% of the carboxyl groups are esterified. If the pectin does not contain any - or only a few - esterified groups it is usually referred to as pectic acid.

The source of pectin will also govern to some extent whether or not other ester groups are present in the pectin structure. In this respect, it is known that some pectins comprise acetyl groups. Here, typically, the hydroxyl groups on $C_2$ or $C_3$ may be acetylated. By way of example, the sugar beet pectin is to some extent acetylated at O-2 and/or O-3 of the galacturonic acid residues.

The structure of pectin, in particular the degree of esterification, determines its physical and/or chemical properties. For example, pectin gelation depends on the chemical nature of pectin, especially the degree of esterification and degree of polymerization. In addition, however, pectin gelation also depends on the pectin concentration and environmental conditions like soluble solids content, the pH and calcium ion concentration.

Furthermore, according to the Food Chemicals Codex, in order to be used in the food industry, the pectin should have a minimum 65% of galacturonic acid on dry and ash-free basis. Thus, the pectin obtained by the process of the present invention is suitable for food applications.

Pectin is commonly extracted as a bulk-extracted pectin fraction showing molecular variability and following a varied interaction between calcium ions and separate pectin molecules having varying affinity towards calcium ions and other charged particles. The bulk-extracted pectin products comprise molecules that represent a broad distribution of esterification degree and molecules of non-random as well as random methyl esterification pattern. This affects the important quality parameters for pectin such as breaking strength of gels, setting temperature profile, interactions with protein or cations and solubility of pectin in food manufacturing applications.

However, many pectin applications require homogeneous pectin fractions but this results in a relatively low pectin yield and high production costs.

A demand is present in the industry for ways to obtain a high extraction yield along with improved pectin functionality both from an environmental and a sustainable as well as an economic point of view due to the efficient use of the pectin containing resources.

## OBJECT OF THE INVENTION

It is the object of the invention to provide a process for extraction and/or isolation of pectin, where the process results in a high yield of pectin being extracted.

Disclosed herein is also the use of the food-grade pectin with a minimum 65% of galacturonic acid (GA) obtained by the claimed process for stabilizing beverages, such as acidified milk or diluted fruit juices, also for structuring of acidified dairy products, as a dietary fiber, a gelling agent, a stabilizer in dairy desserts and/or a protein complexing agent.

## DETAILED DESCRIPTION

This object can be achieved by a process for extraction of pectin from a pectin containing starting material comprising:

a. an acid extraction, where said starting material is subjected to extraction using an acidic solution extracting a first extract leaving a first residuum, where said first extract comprises pectin;
b. an enzyme treatment, where said first residuum is subjected to an enzyme treatment using an enzyme-containing solution, wherein the enzymes are selected from pectinase, exo-polygalacturonase, endo-polygalacturonase, pectin lyase, pectate lyase, rhamnogalacturonase, pectin methyl esterase, pectin acetyl esterase, exo-cellulase, endo-cellulase, hemicellulase, and xylanase, resulting in a second extract and a second residuum where said extract comprises pectin.

Hereby a homogeneous pectin fraction with a narrow distribution of the methyl esters can be obtained. Furthermore, a high yield of pectin from the pectin-containing starting material is extracted.

The term "pectin" is to be understood as a water-soluble form of pectic substance obtained by separation of pectin from a plant material.

The term "food-grade pectin" is to be understood as a pectin approved for food additive having a minimum of 65% of galacturonic acid (GA) on dry and ash-free basis.

"Calcium sensitivity" is a property of pectin which results in increase of viscosity of a pectin solution in presence of calcium ions. Thus, calcium tolerant pectin or non-calcium sensitive pectin (NCSP) is known to have a lower intrinsic viscosity than calcium sensitive pectin (CSP).

In terms of this invention "calcium tolerant pectin" is to be understood as similar to "non-calcium sensitive pectin".

The content of calcium sensitive pectin in a HE pectin product can be described as the "calcium sensitive pectin ratio" (CSP-ratio or CSPR), which is the fraction of calcium sensitive pectin in a pectin product. Pure calcium sensitive pectin therefore theoretically has CSPR=1.0, a pectin which has 50% calcium sensitive pectin has CSPR=0.5 and a pure calcium tolerant pectin has CSPR=0.

The pectin starting material can preferably be obtained from citrus fruits, apples, sugar beets, sunflower heads, vegetables or waste products from plants such as apples, sugar beets, carrots, onions, peaches, grape berries, mangos, guavas, squashes, pumpkins, tomatoes, apricots, bananas, beans, potatoes, sunflower or citrus fruits. Examples of citrus fruits are limes, lemons, grapefruits, mandarins, tangerines, pomelos, and oranges.

In order to obtain the pectin starting material, the fruits and vegetables are treated depending on the type of fruit and vegetable in a manner commonly known by persons skilled in the art. This may comprise a disintegration or pressing of the material to separate juice and oil, followed by several washes with water to remove soluble solids like sugars and residues of oil and fat. The washed material can be pressed and used directly for pectin extraction or dried to more than 85% dry matter to be safe for transport or storage.

In one aspect, the starting materials include dried peel from citrus fruits, having a dry matter content of about 85% by weight or more, preferably in the form of pieces of at the most 2 cm in length, which are obtained as described above after processing of pressed peel from the juice industry after extraction of the citrus juice and the essential oils. These materials all have a high content of pectic substances in the form of water-insoluble protopectin. Citrus peel having a content of extractable pectin in the range of 20-35 wt% on a dry matter basis is particularly interesting.

In a first step, an acid extraction is performed with an acidic solution resulting in an extraction of pectin both calcium tolerant pectin and calcium sensitive pectin into the solution from the pectin starting material. This acid solution forms a first extract from which the pectin can be purified using techniques as further described below. The first step further leaves a first residuum, which is the pectin containing starting material minus the fraction extracted by the acidic solution In one aspect, the pH of said acidic solution is from 1.5 to 2.5. In a further aspect, the pH of said acidic solution is from 2 to 2.5.

In order to increase the yield of the pectin extracted, extraction temperature and time of extraction can be adjusted.

In one aspect, the temperature of said acidic solution is between 15-100°C. In a further aspect, the temperature of said acidic solution is between 65-75°C.

In one aspect, the acid extraction is carried out for a period of time from 0.5 to 10 hours. In a further aspect, the acid extraction is carried out for a period of time from 1 to 8 hours.

The amount of extraction solution to be used in the acid extraction depends for example on the origin and the condition of the pectin-containing material to be extracted and the content of extractable pectin in the material.

In accordance with the invention, the amount of pectin-containing material and extraction solution in each extraction step, which is carried out while gently stirring the suspension of pectin-containing material, is chosen in order for the suspension to have a dry matter content which is in the range of 1% to 20% by weight e.g. in the range of from 2% to 15% by weight such as in the range of from 2% to 6%.

Both organic or an inorganic acids can be used for the acid extraction. Useful acids include strong or medium strong inorganic acids as exemplified by but not limited to hydrochloric acid, sulphuric acid, sulphurous acid, nitric acid or phosphoric acid. Organic acids include but are not limited to formic acid, acetic acid, propionic acid, citric acid, malonic acid, succinic acid, tartaric acid, oxalic acid, glyoxalic acid, lactic acid, glycerolic acid, maleic acid, fumaric acid and benzoic acid. It is to be understood that mixtures of acids may be used.

The acid extraction is followed by an enzyme treatment, where the first residuum obtained from the acid extraction is subjected to an enzyme treatment by means of an enzyme-containing solution. The enzyme treatment results in an extraction of pectin from the first residuum resulting in a second residuum which is the first residuum minus the pectin fraction extracted. The extracted pectin and the enzyme-containing solution form a second extract from which the pectin can be purified using techniques as further described below.

It has surprisingly been found that having an enzyme-containing extraction after an acid extraction results in the release of an additional amount of pectin in addition to the pectin extracted by the acid extraction. The yield of pectin obtained from a particular pectin containing starting material can thus be increased.

In one embodiment, the enzyme treatment may result in a pectin fraction which is almost pure calcium tolerant pectin. Thus, a very homogenous pectin fraction can be obtained by purifying the pectin obtained by the enzyme treatment. This can be obtained for example if the enzyme is galacturonase or pectate lyase.

In one aspect, the pH of said enzyme-containing solution is higher than the pH of said acidic solution. Thus, the pH during the enzyme treatment is higher than the pH during the acid extraction. Hereby, an even higher yield of pectin is obtained.

Furthermore, at a higher pH the hydrolyzing effect is less than at a lower pH whereby the loss of viscosity and deesterification will be less resulting in pectin having a higher functionality.

The pH during the enzyme treatment will depend upon the enzyme used in the process. If the pH used during the enzyme treatment is close to the pH-optimum of the enzyme, the efficiency of the enzyme will be higher than when the pH is not at an optimum for the enzyme. This results for example in either a higher amount of pectin being obtained from the pectin starting material or that a lower amount of enzyme can be used to obtain the same amount of pectin.

In a further aspect, the enzyme-containing solution comprises one or more enzymes. By one or more enzymes is to be understood that the enzyme-containing solution comprises one enzyme, a mixture of two enzymes, a mixture of three enzymes, a mixture of four enzymes, a mixture of five enzymes or a mixture of more than five enzymes.

In one aspect the enzyme-containing solution comprises one enzyme. Hereby, the pectin modification can be better controlled and less breakdown of the pectin is observed. Hence, a homogenous pectin fraction can be obtained.

In a further aspect, the enzyme-containing solution comprises a mixture of enzymes. Hereby, the advantages of several different enzymatic processes can be utilized and/or an even higher yield can obtained.

As an example, the pectin can be specifically modified during the process such as increasing the deesterification by pectin methyl esterase and hereby obtaining an LE pectin. Pectin methyl esterase can be added together with cellulase which increases the release of pectin from the residuum. Thus, a high yield of LE pectin can be obtained by mixing these two enzymes.

Examples of enzymes which can be used according to this invention are pectinase, exo-polygalacturonase, endo-polygalacturonase, pectin lyase, pectate lyase, rhamnogalacturonase, pectin methyl esterase, pectin acetyl esterase, exo-cellulase, endo-cellulase, hemicellulase, xylanase.

In one aspect, the enzyme-containing solution comprises a pectin-degrading enzyme such as polygalacturonase, rhamnogalacturonase or pectinase.

In a further aspect, the enzyme-containing solution comprises galacturonases.

In a further aspect, the enzyme-containing solution comprises cellulase. Cellulase degrades the cellulose from the pectin containing starting material. The degradation of the cellulose enables release of pectin bound in the first residuum.

In one aspect, the pH of said enzyme-containing solution is from 2.5 to 10. In a further aspect, the pH of said enzyme-containing solution is from 2.5 to 7. In a further aspect, the pH of said enzyme-containing solution is from 3 to 5.

In order to optimize the extraction of pectin further, extraction temperature and time of extraction can be adjusted.

In one aspect, the enzyme treatment is carried out for a period of time from 0.5 to 5 hours.

In one aspect, the temperature of said enzyme-containing solution is between 15-75°C. In a further aspect, the temperature of said enzyme-containing solution is between 30-60°C.

In a further aspect, at least one washing is performed between said acid extraction (a) and said enzyme treatment (b). Hereby, the first residuum is washed in order to remove remains of the acidic solution as well as of the first extract.

In a further aspect, at least one washing is performed after said enzyme treatment (b). Hereby, the second residuum is washed in order to remove remains of extracted pectin released by the enzyme treatment. This pectin can then be purified from the washing solution to obtain an even higher yield.

By at least one washing is to be understood that the first or second residuum can be washed one time, that the first or second residuum can be washed two times or that the first or second residuum can be washed three times etc.

The washing can be performed using for example continuous counter-current wash or wash by a percolation process. The washing can e.g. be performed as a continuous wash on a stationary filter or as a counter-current wash.

In one aspect, the solution(s) from one or more washings are mixed into one batch. The pectin can be purified from this batch using techniques as further described below.

The number of washings necessary is dependent upon the pectin containing starting material as well as the extraction parameters as such i.e. pH, temperature, solution, time of extraction etc. Hence, the number of washings is to be adjusted accordingly in order to make sure that traces of the acidic solution and/or the enzyme-containing solution are removed.

The amount of washing solution to be used in the at least one washing depends on the origin and the condition of the pectin-containing starting material, the washing solution, the acidic solution, the enzyme-containing solution and the content of extractable pectin in the material.

In one aspect, the at least one washing is performed in a ratio of washing solution:dry plant material from 5:1 to 50:1. Hereby, is to be understood that if 100 kg dry plant material is used as a pectin containing starting material it is to be washed with 500 to 5000 kg of the washing solution.

In a further aspect, the washing is performed in a ratio of washing solution:dry plant material around 15:1.

In a further aspect, the washing is performed at a temperature between 20°C to 90°C. In a still further aspect, the washing is performed at a temperature between 65°C to 75°C.

In one aspect, at least one of said at least one washings is performed with water. In a still further aspect, at least one of said at least one washings is performed with water at temperature between 50-80°C.

Alternatively, the washing can be performed using weakly acidified water or weakly acidified hot water with a higher pH than the pH of the acidic solution and/or the enzyme-containing solution used in the first and/or second extraction step.

The at least one washing is performed at a certain pH and with a solution for a time and at a temperature, which allows optimal washing in order for the remains to be efficiently removed.

In a further aspect, said first extract and said second extract are mixed.

Hereby, the amount of pectin in the final mixed extract is higher and consequently the yield finally obtained will be higher as well as the work load by purifying one extract instead of two or more will be less.

In a further aspect, the first extract and/or the second extract are mixed with the washing solution.

In a further aspect, the first extract is separated from the first residuum and the second extract is separated from the second residuum by sieving, wet-sieving, decantation or centrifugation.

The separation processes are performed by techniques commonly known to the person skilled in the art and can as such be performed by these persons skilled in the art using their common general knowledge. The separation is performed between the separate steps of the process before isolating the pectin from the extracts or using the residues in further steps in the process.

In a further aspect, the starting material has been subjected to a pre-treatment.

The pre-treatment can be performed in order to change the particle size distribution of the raw material by milling the dry peel or by cutting down the material in an aqueous peel suspension.

In a further aspect, the starting material is in a fresh, frozen or dried state.

Drying of the material can be carried out by means of any conventional drying equipment such as a drying oven, a belt dryer, a drum dryer or a fluid bed dryer for a period of time sufficient to obtain a dry matter content in the material of at least 80% by weight. In one aspect, the dry matter content in the material is at least 90% by weight. The drying is carried out at a temperature ranging from ambient temperature to above 100°C for a period of at most 36 hours. In one aspect, the drying is carried out at a temperature in the range of from 40°C to 100°C, for a period of at most 36 hours. In one aspect, the drying can be carried out at pressures below atmospheric pressures, whereby a relatively lower drying temperature or a comparatively shorter drying period can be used resulting in a more gentle treatment.

In a further aspect, the pectin is further purified from said extract by centrifugation, filtration, ion-exchanging, concentrating, precipitating, washing, pressing, drying and milling.

The extracted pectin may be recovered from the individual extracts i.e. the first and/or second extract, from the pectin-containing washing solutions from the at least one washing and/or from the mixed extracts by any convenient method.

All of these methods can be performed as known to the person skilled in the art.

In a further aspect, the precipitation is performed using 2-propanol.

The precipitation of pectin can be performed with any solution which is water-miscible and in which pectin is substantially insoluble. The precipitated pectin is separated from the liquid by any convenient method, such as for example by decantation, centrifugation or filtration, and the precipitate can then be pressed and washed on the filter to remove soluble salts and impurities. Finally, the pectin can be dried and optionally grinded before use.

The precipitation of pectin by 2-propanol or other alternative solutions from the extract can be preceded by a concentration of the pectin for example by membrane filtration or by evaporation under reduced pressure.

Alternative solutions for precipitation of pectin may be monohydric alcohol, for example methanol, ethanol, tert-butanol, sec-butanol, n-butanol, tert-amyl alcohol, neopentyl alcohol, sec-amyl alcohol or diethylcarbinol; a dihydric alcohol for example ethylene glycol, propylene glycol or tetramethyleneglycol; a ketone, for example acetone, methyl ethyl ketone, methyl isobutyl ketone or methyl tert-butyl ketone; or a glycol ether, for example diethylene glycol monomethylether, ethylene glycol monoethylether, diethylene glycol monomethylether or triethylene glycol dimethylether. Mixtures of two or more of such solutions may also be used in the precipitation of the pectin.

Furthermore disclosed herein is the use of pectin as obtained by the process described above where the pectin is used for stabilizing beverages, structuring of acidified dairy products, as a dietary fiber, a gelling agent, a stabilizer in dairy desserts and/or a protein complexing agent.

Furthermore, a use is described where the beverage is acidified milk or diluted fruit juices.

In one embodiment, the acidified milk products are selected from acidified milk products e.g. having a pH of 3.5 to 5, such as acidified milk, drinking yogurt and yogurt with fruit.

The acidified milk products comprise milk products obtained by acidification either through fermentation with live acid producing bacteria or by addition of fruit juices or food acids.

Furthermore, a use is described where the pectin is used as a stabilizer in dairy desserts.

The pectin can further be used as soluble fibre (optionally: as Ca-salt), carrier of nutrients (Fe, Ca, Zn), binder of radionuclides in food, precursor for conventional low ester pectin or amidated pectin, protein binder for protein recovery from process water in food plants and protein flocculant in waste water plants, encapsulation agent and dye binder.

**EXAMPLES**

**Methods**

Determination of degree of esterification (DE) and galacturonic acid content (GA)

The degree of esterification was determined according to the procedures given in Food Chemicals Codex, Third Edition, National Academic Press, Washington 1981, page 216.

Weigh 5 g of the pectin sample to the nearest 0.1 mg into a 250 ml beaker and add a mixture of 100 ml 60% aqueous 2-propanol and 5 ml conc. hydrochloric acid. Stir on a magnetic stirrer for 10 minutes. Filter through a dried and pre-weighed 30 ml coarse glass filter funnel with reduced vacuum. Wash with six 15 ml portions of HCl-60% 2-propanol mixture. Then wash with 60% aqueous 2-propanol (6-8 portions of 20 ml) until the filtrate is free from chloride (test with a solution of 1.7 g silver nitrate in 100 ml of distilled water). Finally wash with approx. 30 ml of 100% 2-propanol. Dry for 2½ hours in an oven at 105°C. Cool in a desiccator. Weigh.

Pipette 20.00 ml of 0.5 N sodium hydroxide using 20 ml volumetric pipette into a beaker and mix with 20.00 ml of 0.5 N hydrochloric acid, which has been transferred using a 20 ml volumetric pipette. Add two drops of a solution of phenolphthalein (1 g of phenolphthalein is dissolved in 100 ml of 96% ethanol) indicator and titrate with 0.1 N sodium hydroxide. Record the volume $V_0$.

Weigh exactly one tenth of the washed and dried pectin into a 250 ml Erlenmeyer flask and moisten with 2 ml 96% ethanol. Place the flask on a magnetic stirrer and slowly add 100 ml of boiled and cooled deionised water. Avoid splashing. Stir until all the pectin is completely dissolved. Add five drops of the solution of phenolphthalein and titrate with 0.1 N sodium hydroxide. The volume is recorded as $V_1$ in ml. Add 20.00 ml of 0.5 N sodium hydroxide, and shake vigorously. Allow the content to rest for 15 minutes in order to saponify the ester groups. Add 20.00 ml 0.5 N hydrochloric acid and shake until the pink color disappears. Add three drops of the solution of phenolphthalein and titrate with 0.1 N sodium hydroxide until achieving a faint persisting pink color, recording the volume of 0.1 N sodium hydroxide required as $V_2$ ml.

$$\%DE = \frac{V_2 - V_0}{V_1 + V_2 - V_0} * 100$$

$$\%GA = \frac{19.41*(V_1 + V_2 - V_0)}{weight[g]}$$

Determination of intrinsic viscosity

Intrinsic viscosity was determined by extrapolation of the function reduced viscosity divided by the pectin concentration to zero concentration. At a given concentration the reduced viscosity was:

$$\frac{\eta_c - \eta_r}{\eta_r}$$

Where $\eta_c$ is the viscosity of the pectin solution, $\eta_r$ is the viscosity of the solvent (1% aqueous solution of sodium polyphosphate, pH 4.75). The viscosities were measured on a Viscometer C (Haake, Gmbh), at 21.0°C, with a glass ball.

Determination of CSP ratio (CSPR)

2.00 g pectin was dissolved in approx. 90 g demineralised water at 70°C. After cooling to room temperature, pH was increased to 4.0 by addition of 20% by weight sodium carbonate solution during stirring. Demineralised water was added to 100.0 g total weight and the sample was mixed.
15.00 g of the sample was slowly mixed into 30.00 g 80% by weight aqueous 2-propanol in a 50 ml centrifuge screw cap tube to precipitate the pectin. After one hour with frequent shaking, the precipitated material was collected after centrifugation at 2800 g for 20 minutes and decantation of the centrifugate. To the precipitated material was added approx. 25 ml 60% by weight aqueous 2-propanol and it was thoroughly mixed. After one hour with frequent mixing, the precipitate was separated as above. The wash with 60% by weight 2-propanol was repeated once again and after final separation excess liquid was pressed of by hand and the pressed residue transferred to a tray and dried over night at 60°C in a ventilated oven. The isolated pectin was weighed (a gram) and the dry matter a' was determined in the material by drying at 105 °C for 2½ hours.
In a 50 ml centrifuge screw cap tube was added 25.00 g 60 mM $CaCl_2$ in demineralised water containing 16% by weight 2-propanol and mixed with 25.00 g of the prepared pectin sample. The mixture was shaken at lowest speed on an IKA MTS2 Schütler, which was connected to a timer to allow mixing for 1 out of 15 minutes. After 24 hours the mixture was centrifuged at 2800 g for 20 minutes and the liquid siphoned off through a cloth. The precipitated material in the centrifuge tube was weighed and an equal amount of 30 mM $CaCl_2$ in demineralised water containing 8% by weight 2-propanol was added and mixed. The tube was slowly shaken for another 24 hours and centrifuged at 2800 g for 20 minutes and the liquid siphoned off through a cloth. The wash of precipitated CSP was repeated once more. The residue in the tube was finally mixed with two parts of 80% by weight aqueous 2-propanol, and after one hour separated on the cotton cloth, and after draining transferred back to the tube and mixed again twice with equal amount of 60% by weight aqueous 2-propanol and after one hour drained and pressed in the cloth. The press residue was transferred to a tray and dried overnight at 60 °C in a ventilated oven. The residue was weighed (b gram) and the dry matter b' of the material was determined by drying at 105 °C for 2½ hours.
CSP ratio was determined from:

$$CSP\ ratio = \frac{b*b'}{a*a'}$$

CSPR-figures above 1.0 can be achieved because the precipitation of particular small pectin molecules in presence of calcium is more quantitative than the 2-propanol precipitation. A CSPR figure above 1.0 indicates that the sample is pure calcium sensitive pectin.

Pectin yield

The pectin yield from an extraction/washing step is the amount of pectin (calculated as pectin dry matter), which during the extraction/washing step is transformed from insoluble protopectin to soluble pectin, calculated as percentage of the peel material (calculated as dry matter).
The pectin yield is determined for each extraction/washing step by determining the pectin concentration in the clarified extract (by precipitation of a weighed amount of concentrate into 1.2 volumes of 2-propanol, wash of the precipitate with 60% by weight 2-propanol, drying to 100% dry matter and weighing of the residue). From the total amount of extract/washing liquid and the determined pectin concentration, the total amount of soluble pectin is calculated. From this the soluble pectin transferred with the peel residuum from the preceding extraction/wash is calculated from the amount of transferred peel residuum and the pectin concentration in the clarified liquid, determined from the preceding extraction/washing step. This amount of pectin transferred from the preceding extraction/washing step is subtracted from the total amount of pectin found in the extraction/washing step, and the difference gives the yield of pectin from the extraction or washing step.

**Experiment** 1: **With and without enzyme treatment**

Materials

400.0 g dry orange peel was suspended in 11 L of hot demineralized water and pH was adjusted to 2.00 with addition of nitric acid (Technical min. 68% BDH/Prolabo) to achieve a stable level at 70.0°C. The mixture was slowly stirred at 70.0°C for three hours. The content in the reactor was weighed and the mixture was separated on a colander into a sludge phase and a liquid phase, which were weighed. The sludge phase was transferred to the reactor and washed for one hour at 70.0°C by addition of hot demineralised water to 6 L. The total content was weighed and separated again in a sludge phase and a liquid phase, which were weighed. Half of the amount of sludge was transferred to a 5 L reactor, and water was added to approx. 4L in total. pH was increased to 4.0 with addition of 20% aqueous sodium carbonate solution and the temperature was maintained at 50°C by use of a thermostat. 10.05 g of cellulase (Multifect B from Genencor) was added and the mixture was stirred at 50°C and pH 4.00 for three hours. Then the content of the reactor was weighed and separated on a colander. The amounts of sludge and filtrate were weighed. Same procedure was performed with the other half of the amount of sludge, except that no cellulase enzyme was added.

Each type of filtrate was purified by centrifuging and a weighed amount of centrifugate was precipitated by addition to 1.2 volumes of 2-propanol and stirred for approx. 1 hour at 30-40°C. Then the precipitated pectin was separated by filtration through a cloth. The collected precipitate was further washed by suspension in 0.6 volume of 60 vol% 2-propanol for ½ hour. Then the material was drained in a cloth, and pressed in a hydraulic piston press. The pressed pectin was dried at 40°C during night in a ventilated oven. The dried pectin was weighed and milled to pass a 0.5 mm sieve.

The activity of the cellulase was as follows:

Cellulase activity: 7652 U/ml,
Galacturonase activity: 0.1 U/ml,
**Pe**ctin lyase activity: 0.5 U/ml,
Rhamnogalaturonase activity: 1 U/ml.

Results

The pectin yield, the degree of esterification, the intrinsic viscosity, and the calcium sensitive pectin ratio were measured. The parameters were measured as described under materials and methods.

**Table 1: With enzyme treatment**

|  | Yield | cYield | DE | GA | Intrinsic viscosity L/g | CSPR |
|---|---|---|---|---|---|---|
| Acid extraction | 26.8% | 26.8% | 66.8% | 70.4% | 0.45 | 0.54 |
| Wash | 0.0% | 26.8% | 67.7% | 71.0% | 0.40 | 0.53 |
| Cellulase treatment | 10.1% | 36.9% | 69.2% | 58.3% | 0.18 | 0.05 |
| DE: degree of esterification; GA: galacturonic acid; Yield: yield generated pr. step; cYield: cumulated pectin yield; CSPR: calcium sensitive pectin ratio | | | | | | |

**Table 2: Without enzyme treatment**

|  | Yield | cYield | DE | GA | Intrinsic viscosity L/g | CSPR |
|---|---|---|---|---|---|---|
| Acid extraction | 26.8% | 26.8% | 66.8% | 70.4% | 0.45 | 0.54 |
| Wash | 0.0% | 26.8% | 67.7% | 71.0% | 0.40 | 0.53 |
|  |  |  |  |  |  |  |

(continued)

|  | Yield | cYield | DE | GA | Intrinsic viscosity L/g | CSPR |
|---|---|---|---|---|---|---|
| Treatment without enzyme | 5.5% | 32.3% | 63.1% | 67.8% | 0.39 | 0.93 |

| DE: degree of esterification; GA: galacturonic acid; Yield: yield generated pr. step; cYield: cumulated pectin yield; CSPR: calcium sensitive pectin ratio |
|---|

A higher yield of pectin is released when treating with enzyme in contrast to treatment without enzyme (10.1% vs. 5.5%). The purified fraction results in a relatively high CSPR without enzyme (0.93). However, when treating with this enzyme this ratio is very low (0.05).

## Experiment 2: Enzyme treatment alone

### Materials

200.0 g dry orange peel was suspended in 5.5 L of hot demineralized water at 50°C and pH was adjusted to 4.00 with addition of a few drops of nitric acid (Technical min. 68% BDH/Prolabo) to achieve a stable level. 10.00 g of cellulase (Multifect B from Genencor) was added and the mixture was stirred at 50°C for 3 hours at pH 4.00. The content in the reactor was weighed and the mixture was separated on a colander into a sludge phase and a liquid phase, which were weighed. The filtrate was purified by centrifuging and a weighed amount of centrifugate was precipitated by addition to 1.2 volumes of 2-propanol and stirred for approx. 1 hour at 30-40°C. Then the precipitated pectin was separated by filtration through a cloth. The collected precipitate was further washed by suspension in 0.6 volume of 60 vol% aqueous 2-propanol for ½ hour. Then the material was drained in a cloth, and pressed in a hydraulic piston press. The pressed pectin was dried at 40°C during night in a ventilated oven. The dried pectin was weighed and milled to pass a 0.5 mm sieve.
The activity of the cellulase was as follows:

Cellulase activity: 7652 U/ml,
Galacturonase activity: 0.1 U/ml,
Pectin lyase activity: 0.5 U/ml,
Rhamnogalaturonase activity: 1 U/ml.

### Results

The pectin yield, the degree of esterification, the intrinsic viscosity, and the calcium sensitive pectin ratio were measured. The parameters were measured as described under materials and methods.

### Table 3: Enzyme treatment alone

|  | Yield | cYield | DE | GA | Intrinsic viscosity L/g | CSPR |
|---|---|---|---|---|---|---|
| Cellulase extraction | 13.8% | 13.8% | 77.5% | 71.8% | 0.23 | 0.06 |

| DE: degree of esterification; GA: galacturonic acid; Yield: yield generated pr. step; cYield: cumulated pectin yield; CSPR: calcium sensitive pectin ratio |
|---|

A lower cumulated yield of pectin is released from the peels when treating with enzyme alone in contrast to a two-step process were the peels are treated with acid before the treatment with enzyme (13.8%% vs. 36.9% (Table 1)). The obtained pectin fraction shows a low CSPR (0.06) illustrating that the obtained pectin is primarily non-calcium sensitive pectin.

## Experiment 3: With and without enzyme treatment

### Materials

400.0 g dry orange peel was suspended in 11 L of hot demineralized water and pH was adjusted to 2.00 with addition of nitric acid (Technical min. 68% BDH/Prolabo) to achieve a stable level at 70.0°C. The mixture was slowly stirred at 70.0°C for 3 hours. The content in the reactor was weighed and the mixture was separated on a colander into a sludge phase and a liquid phase, which were weighed. The sludge phase was transferred to the reactor and washed for one hour at 70.0°C by addition of hot demineralised water to 6 L. The total content was weighed and separated again in a sludge phase and a liquid phase, which were weighed. Half of the amount of sludge was transferred to a 5 L reactor, and water was added to approx. 4L in total. pH was increased to 4.0 with addition of 20% aqueous sodium carbonate solution and the temperature was maintained at 50°C by use of a thermostat. 1.3 µL of commercial galacturonase (Rhoament PL from Röhm, Darmstadt) was added and the mixture was stirred at 50°C and pH 4.0 for three hours. Then the content of the reactor was weighed and separated on a colander. The amounts of sludge and filtrate were weighed. Same procedure was performed with the other half of the amount of sludge, except that no galacturonase enzyme was added.

Each type of filtrate was purified by centrifuging and a weighed amount of centrifugate was precipitated by addition to 1.2 volumes of 2-propanol and stirred for approx. 1 hour at 30-40°C. Then the precipitated pectin was separated by filtration through a cloth. The collected precipitate was further washed by suspension in 0.6 volume of 60 vol% 2-propanol for ½ hour. Then the material was drained in a cloth, and pressed in a hydraulic piston press. The pressed pectin was dried at 40°C during night in a ventilated oven. The dried pectin was weighed and milled to pass a 0.5 mm sieve.

**Table 4: With galacturonase treatment**

| | Yield | cYield | DE | GA | Intrinsic viscosity L/g | CSPR |
|---|---|---|---|---|---|---|
| Acid extraction | 25.5% | 25.5% | 70.1% | 83.7% | 0.42 | 0.52 |
| Wash | 0.1% | 25.6% | 69.9% | 79.4% | 0.37 | 0.56 |
| Galacturonase treatment (1.3 µL Rhoament PL/200 g peel) | 7.0% | 32.6% | 61.6% | 71.2% | 0.37 | 1.00 |
| DE:degree of esterification; GA: galacturonic acid; Yield:yield generated pr. step; cYield:cumulated pectin yield; CSPR:calcium sensitive pectin ratio | | | | | | |

**Table 5: Without enzyme treatment**

| | Yield | cYield | DE | GA | Intrinsic viscosity L/g | CSPR |
|---|---|---|---|---|---|---|
| Acid extraction | 25.5% | 25.5% | 70.1% | 83.7% | 0.42 | 0.52 |
| Wash | 0.1% | 25.6% | 69.9% | 79.4% | 0.37 | 0.56 |
| Treatment without enzyme | 5.9% | 31.5% | 64.3% | 74.8% | 0.40 | 0.87 |
| DE:degree of esterification; GA: galacturonic acid; Yield:yield generated pr. step; cYield:cumulated pectin yield; CSPR:calcium sensitive pectin ratio | | | | | | |

## Experiment 4

Same procedure as Experiment 3, but higher dosages of galacturonase were added.

**Table 6: With galacturonase treatment**

| | Yield | cYield | DE | GA | Intrinsic viscosity L/g | CSPR |
|---|---|---|---|---|---|---|
| Acid extraction | 25.6% | 25.6% | 70.2% | 83.4% | 0.41 | 0.46 |
| Wash | 0.2% | 25.8% | 70.5% | 80.6% | 0.40 | 0.53 |
| Galacturonase treatment (5 µL Rhoament PL/200 g peel) | 4.9% | 30.7% | 66.1% | 77.3% | 0.43 | 0.70 |
| DE:degree of esterification; GA: galacturonic acid; Yield:yield generated pr. step; cYield:cumulated pectin yield;CSPR: calcium sensitive pectin ratio | | | | | | |

## Experiment 5

Same procedure as Experiment 3, but oxalic acid was added to second extraction.

Table 7: with galacturonase treatment

| | Yield | cYield | DE | GA | Intrinsic viscosity L/g | CSPR |
|---|---|---|---|---|---|---|
| Acid extraction | 24.1% | 24.1% | 72.5% | 81.9% | 0.50 | 0.54 |
| Wash | 0.3% | 24.4% | 71.0% | 80.4% | 0.44 | 0.62 |
| Enzyme + chelate extraction (1.3 $\mu$L Rhoament PL/200 g peel) (3 g oxalic acid dihydrate/200 g peel) | 10.6% | 35.0% | 59.8% | 75.0% | 0.43 | 0.99 |
| DE: degree of esterification; GA: galacturonic acid; Yield: yield generated pr. step; cYield: cumulated pectin yield; CSPR: calcium sensitive pectin ratio | | | | | | |

**Table 8: without enzyme treatment**

| Internal | | | | | | |
|---|---|---|---|---|---|---|
| | Yiel d | cYie ld | DE | GA | Intrinsic viscosity L/g | CSPR |
| Acid extraction | 24.1 % | 24.1 % | 72.5 % | 81.9 % | 0.50 | 0.54 |
| Wash | 0.3 % | 24.4 % | 71.0 % | 80.4 % | 0.44 | 0.62 |
| Chelate extraction (3 g oxalic acid dihydrate/200g peel) | 7.6 % | 32.0 % | 60.4 % | 76.4 % | 0.49 | 1.01 |
| DE: degree of esterification; GA: galacturonic acid; Yield: yield generated pr. step; cYield: cumulated pectin yield; CSPR: calcium sensitive pectin ratio | | | | | | |

**Claims**

1. A process for extraction of pectin from a pectin containing starting material comprising:

   a. an acid extraction, where said starting material is subjected to extraction using an acidic solution extracting a first extract leaving a first residuum, where said first extract comprises pectin, wherein said acid extraction is carried out for a period of time from 0.5 to 10 hours;
   b. an enzyme treatment, where said first residuum is subjected to an enzyme treatment using an enzyme-containing solution, which comprises one or more enzymes selected from pectinase, exo-polygalacturonase, endo-polygalacturonase, pectin lyase, pectate lyase, rhamnogalacturonase, pectin methyl esterase, pectin acetyl esterase, exo-cellulase, endo-cellulase, hemicellulase, and xylanase, resulting in a second extract and a second residuum where said second extract comprises pectin;

   wherein the pH of said enzyme-containing solution is higher than the pH of said acidic solution and the pH of said enzyme-containing solution is from 2.5 to 7.

2. The process according to claim 1, **characterized in that** at least one washing is performed between said acid extraction (a) and said enzyme treatment (b).

3. The process according to any of the preceding claims, **characterized in that** the pH of said acidic solution is from 1.5 to 2.5.

4. The process according to any of the preceding claims, **characterized in that** at least one washing is performed after said enzyme treatment (b).

5. The process according to any of the preceding claims, **characterized in that** said first extract and said second extract are mixed.

6. The process according to any of the preceding claims, **characterized in that** said first extract is separated from said first residuum and said second extract is separated from said second residuum by sieving, wet-sieving, decantation or centrifugation.

7. The process according to any of the preceding claims, **characterized in that** said enzyme-containing solution comprises cellulase.

8. The process according to any of the preceding claims, **characterized in that** said enzyme-containing solution comprises galacturonases.

9. The process according to any of the preceding claims, wherein the temperature of said acidic solution is between 15-100°C.

10. The process according to any of the preceding claims, wherein the temperature of said enzyme-containing solution is between 15-75°C.

11. The process according to any of the claims 2-10, **characterized in that** said at least one washing is performed in a ratio of washing solution: dry plant material from 5:1 to 50:1

12. The process according to any of the preceding claims, **characterized in that** said pectin is further purified from said extract by centrifugation, filtration, ion-exchanging, concentrating, precipitating, washing, pressing, drying and milling, in which the precipitating is performed using 2-propanol.


**Patentansprüche**

1. Verfahren zur Extraktion von Pektin aus einem pektinhaltigen Ausgangsmaterial, umfassend:

   a. eine Säureextraktion, wobei das Ausgangsmaterial einer Extraktion unter Verwendung einer sauren Lösung unterzogen wird, die einen ersten Extrakt extrahiert und einen ersten Rückstand hinterlässt, wobei der erste Extrakt Pektin umfasst, wobei die Säureextraktion über einen Zeitraum von 0,5 bis 10 Stunden durchgeführt wird;
   b. eine Enzymbehandlung, bei der der erste Rückstand einer Enzymbehandlung unter Verwendung einer enzymhaltigen Lösung, die ein oder mehrere aus Pektinase, exo-Polygalacturonase, endo-Polygalacturonase, Pektinlyase, Pektatlyase, Rhamnogalacturonase, Pektinmethylesterase, Pektinacetylesterase, exo-Cellulase, endo-Cellulase, Hemicellulase und Xylanase ausgewählte Enzyme umfasst, unterzogen wird, was zu einem zweiten Extrakt und einem zweiten Rückstand führt, wobei der zweite Extrakt Pektin umfasst;

   wobei der pH-Wert der enzymhaltigen Lösung höher ist als der pH-Wert der sauren Lösung und der pH-Wert der enzymhaltigen Lösung 2,5 bis 7 beträgt.

2. Verfahren nach Anspruch 1, **dadurch gekennzeichnet, dass** zwischen der Säureextraktion (a) und der Enzymbehandlung (b) mindestens eine Waschung durchgeführt wird.

3. Verfahren nach einem der vorhergehenden Ansprüche, **dadurch gekennzeichnet, dass** der pH-Wert der sauren Lösung 1,5 bis 2,5 beträgt.

4. Verfahren nach einem der vorhergehenden Ansprüche, **dadurch gekennzeichnet, dass** nach der Enzymbehandlung (b) mindestens eine Waschung durchgeführt wird.

5. Verfahren nach einem der vorhergehenden Ansprüche, **dadurch gekennzeichnet, dass** der erste Extrakt und der zweite Extrakt gemischt werden.

6. Verfahren nach einem der vorhergehenden Ansprüche, **dadurch gekennzeichnet, dass** der erste Extrakt von dem ersten Rückstand und der zweite Extrakt von dem zweiten Rückstand durch Sieben, Nasssieben, Dekantieren oder Zentrifugieren getrennt wird.

7. Verfahren nach einem der vorhergehenden Ansprüche, **dadurch gekennzeichnet, dass** die enzymhaltige Lösung Cellulase umfasst.

8. Verfahren nach einem der vorhergehenden Ansprüche, **dadurch gekennzeichnet, dass** die enzymhaltige Lösung Galacturonasen umfasst.

9. Verfahren nach einem der vorhergehenden Ansprüche, wobei die Temperatur der sauren Lösung 15-100 °C beträgt.

10. Verfahren nach einem der vorhergehenden Ansprüche, wobei die Temperatur der enzymhaltigen Lösung 15-75 °C beträgt.

11. Verfahren nach einem der Ansprüche 2-10, **dadurch gekennzeichnet, dass** die mindestens eine Waschung in einem Verhältnis von Waschlösung zu trockenem Pflanzenmaterial von 5:1 bis 50:1 durchgeführt wird.

12. Verfahren nach einem der vorhergehenden Ansprüche, **dadurch gekennzeichnet, dass** das Pektin aus dem Extrakt weiter durch Zentrifugieren, Filtrieren, Ionenaustausch, Konzentrieren, Ausfällen, Waschen, Pressen, Trocknen und Mahlen aufgereinigt wird, wobei die Ausfällung mit 2-Propanol erfolgt.


**Revendications**

1. Procédé d'extraction de pectine à partir d'une matière de départ contenant une pectine comprenant :

   a. une extraction à l'acide, où ladite matière de départ est soumise à une extraction à l'aide d'une solution acide extrayant un premier extrait laissant un premier résidu, où ledit premier extrait comprend de la pectine, où ladite extraction à l'acide est réalisée pendant une période de temps de 0,5 à 10 heures ;
   b. un traitement enzymatique, où ledit premier résidu est soumis à un traitement enzymatique en utilisant une solution contenant une enzyme, qui comprend une ou plusieurs enzymes choisies parmi la pectinase, l'exo-polygalacturonase, l'endo-polygalacturonase, la pectine lyase, la pectate lyase, la rhamnogalacturonase, la pectine méthyl estérase, la pectine acétyl estérase, l'exo-cellulase, l'endo-cellulase, l'hémicellulase et la xylanase, conduisant à un deuxième extrait et un deuxième résidu où ledit deuxième extrait comprend de la pectine ; dans lequel le pH de ladite solution contenant une enzyme est supérieur au pH de ladite solution acide et le pH de ladite solution contenant une enzyme est de 2,5 à 7.

2. Procédé selon la revendication 1, **caractérisé en ce qu'**au moins un lavage est effectué entre ladite extraction à l'acide (a) et ledit traitement enzymatique (b).

3. Procédé selon l'une quelconque des revendications précédentes, **caractérisé en ce que** le pH de ladite solution acide est de 1,5 à 2,5.

4. Procédé selon l'une quelconque des revendications précédentes, **caractérisé en ce qu'**au moins un lavage est effectué après ledit traitement enzymatique (b).

5. Procédé selon l'une quelconque des revendications précédentes, **caractérisé en ce que** ledit premier extrait et ledit second extrait sont mélangés.

6. Procédé selon l'une quelconque des revendications précédentes, **caractérisé en ce que** ledit premier extrait est séparé dudit premier résidu et ledit second extrait est séparé dudit second résidu par tamisage, tamisage humide, décantation ou centrifugation.

7. Procédé selon l'une quelconque des revendications précédentes, **caractérisé en ce que** ladite solution contenant une enzyme comprend une cellulase.

8. Procédé selon l'une quelconque des revendications précédentes, **caractérisé en ce que** ladite solution contenant une enzyme comprend des galacturonases.

9. Procédé selon l'une quelconque des revendications précédentes, dans lequel la température de ladite solution acide est comprise entre 15-100 °C.

10. Procédé selon l'une quelconque des revendications précédentes, dans lequel la température de ladite solution contenant une enzyme est comprise entre 15-75 °C.

**11.** Procédé selon l'une quelconque des revendications 2 à 10, **caractérisé en ce que** ledit au moins un lavage est effectué en un rapport solution de lavage:matière végétale sèche de 5:1 à 50:1.

**12.** Procédé selon l'une quelconque des revendications précédentes, **caractérisé en ce que** ladite pectine est en outre purifiée dudit extrait par centrifugation, filtration, échange d'ions, concentration, précipitation, lavage, pressage, séchage et broyage, dans lequel la précipitation est effectuée au moyen de 2-propanol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Food Chemicals Codex. National Academic Press, 1981, 216